## Europäisches Patentamt
## European Patent Office
## Office européen des brevets

(19)

(11) Veröffentlichungsnummer: **0 305 880 B1**

(12) **EUROPÄISCHE PATENTSCHRIFT**

(45) Veröffentlichungstag der Patentschrift: **11.11.92**

(51) Int. Cl.5: **H01M 2/12**, B65D 83/14, H01G 9/12

(21) Anmeldenummer: **88113800.2**

(22) Anmeldetag: **24.08.88**

(54) **Druckbehälter.**

(30) Priorität: **27.08.87 DE 3728546**

(43) Veröffentlichungstag der Anmeldung:
**08.03.89 Patentblatt 89/10**

(45) Bekanntmachung des Hinweises auf die Patenterteilung:
**11.11.92 Patentblatt 92/46**

(84) Benannte Vertragsstaaten:
**DE FR GB**

(56) Entgegenhaltungen:
EP-A- 0 177 847     EP-A- 0 217 725
EP-A- 0 266 541     DE-A- 2 336 889
FR-A- 1 271 829     FR-A- 2 273 209
US-A- 4 256 812     US-A- 4 576 303

PATENT ABSTRACTS OF JAPAN, Band 9, Nr. 4 (E-288)[1727], 10. Januar 1985; & JP-A-59 154 743 (HITACHI MAXELL K.K.) 03-09-1984

PATENT ABSTRACTS OF JAPAN, Band 6, Nr. 215 (E-138)[1093], 28. Oktober 1982; & JP-A-57 118 363 (FURUKAWA DENCHI K.K.) 23-07-1982

(73) Patentinhaber: **SONNENSCHEIN LITHIUM GMBH**
**Industriestrasse 22**
**W-6470 Büdingen(DE)**

(72) Erfinder: **Jache, Frank**
**Kellergasse 6**
**W-6470 Büdingen 1(DE)**
Erfinder: **Dittrich, Thomas, Dr.**
**Hauptstrasse 47a**
**W-6470 Büdingen 2(DE)**

(74) Vertreter: **Baumann, Eduard, Dipl.-Phys.**
**Postfach 1201 Sattlerstrasse 1**
**W-8011 Höhenkirchen bei München(DE)**

EP 0 305 880 B1

Rank Xerox (UK) Business Services

## Beschreibung

Die Erfindung bezieht sich auf einen Druckbehälter gemäß dem Oberbegriff des Anspruches 1.

Derartige Druckbehälter finden überall dort Verwendung, wo die Gefahr besteht, daß sich ein Innendruck entwickeln kann, der zu einer gefährlichen Explosion führen könnte, sei es bei zu hoher Erwärmung, unter anderem bei Auto-Reservekanistern, sei es in Folge von elektrochemischen Vorgängen wie bei elektrischen Kondensatoren, oder sei es insbesondere bei Batterien und Akkumulatoren, vorzugsweise bei derartigen Batterien mit hohem Energieinhalt auf der Basis von Lithiumthionylchloridzellen oder ähnlichen Zellen auf der Basis $Li/SOCl_2$, $Li/SO_2$, $Li/MnO_2$ und $Li/SO_2Cl_2$.

Wesentliche Eigenschaften von als Sollbruchstelle vorgesehenen Schwächungslinien sind:

a) ein öffnen der Sollbruchstelle bei möglichst genau definiertem und von den Einsatzbedingungen unabhängigem Druckbereich, beispielsweise bei 10 bis 12 bar bei den erwähnten Batteriebechern mit hohem Energieinhalt,

b) möglichst geringe Längenausdehnung des Druckbehälters vor dem öffnen der Sollbruchstelle, die bei den erwähnten Batterien möglichst unter 1 mm liegen sollte,

c) möglichst rasches öffnen der Sollbruchstelle,

d) Freigabe einer möglichst großen Öffnung der Sollbruchstelle in kurzer Zeit.

Ein Druckbehälter ist in der US-PS 2,525,436 beschrieben. Als Schwächungslinien sind hierbei zwei sich kreuzende gerade Linien vorgesehen. Das Aufbringen ist verhältnismäßig aufwendig, die beim öffnen freigegebene Öffnung ist verhältnismäßig klein. Ähnliche Schwächungslinien sind bei einem Druckbehälter gemäß US-PS 4256812 vorgesehen.

In der US-PS 2,478,798 ist im Behälter selbst eine durchgehende Rille eingezeichnet, die zunächst durch ein Klebeband oder dergleichen überklebt wird und bei überhöhtem Druck öffnet. Dies bedingt das Problem einer ausreichenden Betriebsdichtigkeit, einer wirklich stets bei gleichem Druck öffnenden Sollbruchstelle und das zusätzliche Aufbringen eines geeigneten Klebebandes. In der US-PS 4,484,691 ist ein zylinderförmiger Behälter mit verhältnismäßig aufwendigen zwei Wulsten dargestellt, die sich entweder koaxial oder um den Umfang herum erstrecken und über eine dazwischen liegende nicht ausgebeulte Schwächungsstelle miteinander verbunden sind, die sich bei überdruck öffnet. Die Herstellung ist aufwendig, dennoch erhält man nur eine kleine Öffnung, die Herstellungsweise selbst erschwert eine genaue Einstellung auf bei einem bestimmten Einsatzzweck gewünschten Auslösedruck. Bei der US-PS 4,175,166 ist achsparallel eine gerade Schwächungslinie vorgesehen, die bei überdruck öffnen soll. Das öffnen wird an einer einzigen punktförmigen Stelle erfolgen, wo zufällig die schwächste Wandstärke ist, somit erhält man auch hier nur eine sehr kleine Öffnung und einen verzögerten Druckabbau, was unter Umständen zur Explosion führen kann. Auch hier ist es schwierig, einen möglichst genau definierten Auslösedruck herzustellen.

Ein Druckbehälter der im Oberbegriff des Anspruches 1 beschriebenen Art ist aus der DE-OS 2336889, insbesondere Fig. 12 und Beschreibung, bekannt. Die Form der am kreisförmigen Behälterboden angeordneten Schwächungslinie ist hier zickzack-förmig.

In der FR-PS 1271829 ist an einem kreisrunden Behälterboden parallel zur Umfangslinie eine nicht geschlossene sichelförmige Schwächungslinie vorgesehen. Hier kann sich nur ein einziges Flächenteil durch Schwenken nach außen öffnen und nicht zwei gegenüberliegende Flächenteile, die an der gleichen Schwächungslinie anliegen. Die JP-OS 59-154743 zeigt eine ähnliche Ausbildung an einem kreisförmigen Behälterboden, wobei lediglich eine U-förmige Schwächungslinie anstatt einer sichelförmige Schwächungslinie vorgesehen ist.

Der Erfindung liegt das Problem zugrunde, einen Batteriebehälter gemäß dem Oberbegriff des Anspruches 1 so auszugestalten, daß bei möglichst definiertem gewünschtem Auslösedruck in kürzerer Zeit eine größere Öffnung entsteht.

Das Problem wird erfindungsgemäß durch die Merkmale des Kennzeichens des Anspruches 1 gelöst. Weitere Ausbildungen der Erfindung sind in den abhängigen Unter ansprüchen unter Schutz gestellt.

Die Grundidee besteht im Vorsehen einer einzigen (oder bei Bedarf von mehreren unabhängig voneinander angeordneten) Schwächungslinien in Form einer einzigen zungenförmigen Kurvenlinie, die eine Mehrfach Zunge bildet und deren beide freie Enden in den übrigen Behälter übergehen. Beim Erreichen des gewünschten definierten Druckes kann sich der Zungenbereich im Bereich der Schwächungslinien lösen und rasch um eine Achse, welche die gedachte Verbindungslinie zwischen den beiden freien Enden der Zunge darstellt, ausschwenken. Auf diese Weise wird in kürzester Zeit eine sehr große Öffnung freigegeben, der entstandene Druck wird in kürzester Zeit abgebaut, eine Explosion kann sicher vermieden werden. Es sind mehrere nebeneinander liegende Zungenteile möglich, wobei dazwischen eine Zungenaussparung liegt. Im Auslösefall können dann nicht nur die mehreren freien Zungenenden ausschwenken, sondern auch die dazwischen angeordnete Zungenaussparung, so daß sich ein sehr großer Zungenbereich ergibt. Da eine größere Länge der Schwächungslinie vorgesehen ist, ergibt sich eine andere Öffnungscharakteristik.

Die Kurvenlinie kann an ebenen, jedoch auch an gekrümmten Oberflächen des Druckbehälters vorgesehen werden. Ein besonders einfaches Aufbringen geschieht durch Prägen, wobei sich bestimmte Dicken und Querschnittsverhältnisse als vorteilhaft herausgestellt haben. Die Materialwahl ist dem speziellen Einsatzzweck beliebig anzupassen, für Batteriebecher hat sich beispielsweise ein bestimmter Edelstahl bewährt.

Ein spezieller Vorteil des Erfindungsgegenstandes besteht auch darin, daß beim Auslösen keine Teile wegfliegen, die irgendwelchen Schaden anrichten könnten.

Bei der Verwendung von austenitischem Edelstahl, insbesondere mit den Stoffbezeichnungen gemäß DIN 1.4301, 1.4303, 1.4306, 1.4401, 1.4406 oder chemisch und physikalisch verwandter Materialien ist ein auf das Prägen folgendes Glühen von großer Bedeutung. Das Glühen muß mindestens den Prägebereich umfassen, aus Zweckmäßigkeitsgründen wird man jedoch in der Regel den gesamten Druckbehälter, insbesondere in Form eines Batteriebechers, glühen. Die Verformung des Druckbehälters, insbesondere im Prägebereich, macht den Druckbehälter von innen korrosionsanfällig durch den Elektrolyten. Es zeigte sich, daß durch das Glühen diese Korrosionsanfälligkeit beseitigt werden kann. Dieses Glühen ermöglicht somit überhaupt erst für die Lebensdauer einer derartigen Batterie die Verwendung von Schwächungslinien in Form von Prägelinien. Abhängig vom Material liegt die Temperatur des Glühens, das bei Schutzgasatmosphäre stattfindet, bei etwa 1100° C. Hiervon können sich Abweichungen von etwa ± 200° C ergeben. Eine Glühzeit von etwa 2 bis 10 Minuten hat sich als ausreichend herausgestellt.

Ausführungsbeispiele der Erfindung sind in der Zeichnung dargestellt.

Es zeigt:

Figur 1    den Längsschnitt durch einen Batteriebecher,

Figur 2    die Draufsicht auf den Unterboden des Batteriebechers von Figur 1,

Figur 3    die Draufsicht auf den Unterboden eines ähnlichen Batteriebecher mit einer anderen Kurvenlinie.

In der Zeichnung sind gleiche Teile mit gleichen Bezugszeichen versehen.

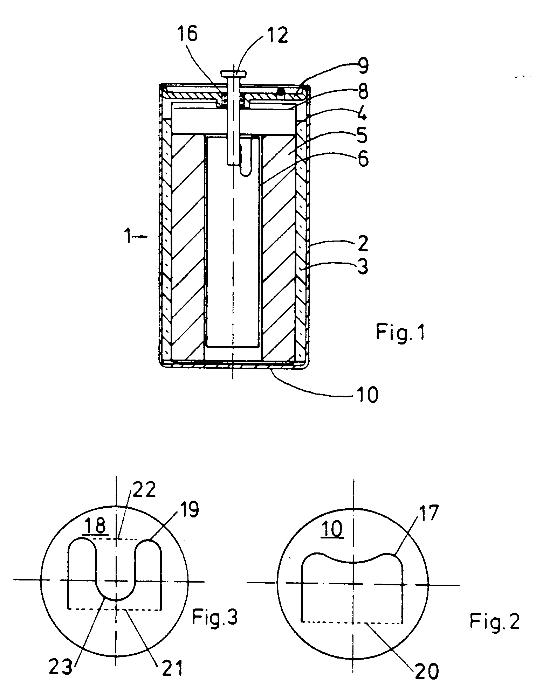

In Figur 1 ist der Batteriebecher allgemein mit (1) bezeichnet.

Der eigentliche äußere Batteriebecher ist hierbei mit (2) bezeichnet, er enthält die Schwächungslinie in Form einer Kurvenlinie (17) am Becherboden (10). Die übrigen Teile wie Anode (3), Separator (4), Kathode (5), Kollektor (6), Kopfisolator (8), Deckel (9), negativem Pol (12) und Glasisolierung (16) sind für den Erfindungsgegenstand ohne Bedeutung.

In Figur 2 ist die Draufsicht auf den Boden (10) mit Schwächungslinie (17) dargestellt. Beim Auslösen der Schwächungslinie in Form der Kurvenlinie (17) schwenkt diese um eine gedachte und gestrichelt gezeichnete Achse (20) nach außen, um eine große Öffnung freizugeben.

Figur 3 zeigt ein anderes Ausführungsbeispiel auf einem anderen Boden (18) eines Batteriebechers, wobei die Schwächungslinie in Form einer Kurvenlinie (19) doppelte Zungenform mit einer dazwischen liegenden Zungenaussparung (23) aufweist. Im Auslösefall schwenken die beiden äußeren Zungenteile um die gestrichelt dargestellte gedachte Schwenkachse (21) nach außen, gleichzeitig schwenkt die Zungenaussparung um die gestrichelt gezeichnete gedachte Achse (22) nach außen, so daß eine sehr große Öffnung in kürzester Zeit freigegeben wird.

**Patentansprüche**

1.   Druckbehälter, insbesondere Batteriebecher (1) für Batterien mit hohem Energieinhalt auf der Basis von Lithiumthionylchloridzellen oder ähnlichen Zellen wie Li/SO$_2$-, Li/MnO$_2$- oder Li/SO$_2$Cl$_2$- Zellen, mit einer Sicherheitssollbruchstelle in Form einer einzigen gekrümmten Schwächungslinie am Gehäuse, die bei überhöhtem Druck aufbricht, so daß die Schwächungslinie um die gedachte Verbindungslinie der freien Enden der Schwächungslinie nach außen schwenkt, welche freien Enden in den normalen Behälterbereich übergehen, dadurch gekennzeichnet, daß die Schwächungslinie eine Kurvenlinie ist, die eine Mehrfachzunge (17, 19) bildet.

2.   Druckbehälter nach Anspruch 1, dadurch gekennzeichnet, daß die Mehrfachzunge eine Doppelzunge (19) mit Zungenausschnitt ist.

3.   Druckbehälter nach Anspruch 1 oder Anspruch 2, dadurch gekennzeichnet, daß die Kurvenlinie (17, 19) an der ebenen Seitenfläche eines im wesentlichen zylindrischen Druckbehälters wie eines Batteriebechers (1) vorgesehen ist.

4.   Druckbehälter nach einem der Ansprüche 1 bis 3, dadurch gekennzeichnet, daß die Schwächungslinie (17, 19) in die Außenwandung des Druckbehälters eingeprägt ist.

5.   Druckbehälter nach einem der Ansprüche 1 bis 4, dadurch gekennzeichnet, daß die an der Schwächungslinie (17, 19) noch vorhandene Restwandstärke 0,02 bis 0,1 mm, vorzugsweise 0,04 bis 0,06 mm, beträgt, daß die übrige Wandstärke etwa 0,5 mm beträgt, daß die Schwächungslinie die Form einer Kerbe mit einem Winkel zwischen 30° und 100°, vorzugsweise 55 bis 65°, beträgt, wobei die Scheitelbreite an der Außenwand 0,01 bis 1 mm, vorzugsweise 0,05 bis 0,2 mm, beträgt.

6. Druckbehälter nach einem der Ansprüche 1 bis 5, dadurch gekennzeichnet, daß als Material zäher und harter Edelstahl eingesetzt wird.

7. Druckbehälter nach einem der Ansprüche 1 bis 6, dadurch gekennzeichnet, daß die Schwächungslinie (17, 19) durch Prägen und anschließendes Glühen wenigstens des Prägen bereiches des Druckbehälters entstanden ist.

8. Druckbehälter nach Anspruch 7, dadurch gekennzeichnet, daß das Glühen unter Schutzgasatmosphäre bei einer Temperatur von 1100°C plus/minus ca. 200°C und für eine Zeitdauer zwischen 2 und 10 Minuten stattgefunden hat.

## Claims

1. Pressurized container, especially battery cup (1) for batteries having a high energy content and based on lithium thionyl chloride cells or similar cells as $Li/SO_2$-, $Li/MnO_2$- or $Li/SO_2Cl_2$- cells, containing a nominal break point for safety reasons in form of one single curved weakening line at the housing which breaks at extensive pressure such that the weakening line swivels outward about a thought connection line of the free ends of the weakening line, the free ends of which pass into the usual container area, characterized in that the weakening line is a curve line which forms a multiple tongue (17, 19).

2. Pressurized container according to claim 1, characterized in that the multiple tongue is a double tongue (19) including a tongue- shaped cutout.

3. Pressurized container according to claim 1 or claim 2, characterized in that the curve line (17, 19) is provided on the plane side surface of an in essential cylindrical pressurized container as of a battery cup (1).

4. Pressurized container according to one of claims 1 to 3, characterized in that the weakening line (17, 19) is stamped into the outer wall of the pressurized container.

5. Pressurized container according to one of the claims 1 to 4, characterized in that the wall thickness still remaining at the weakening line (17, 19) is 0,02 to 0,1 mm, preferably 0,04 to 0,06 mm, that the usual wall thickness is about 0,5 mm, that the weakening line has the form of a notch comprising an angle between 30° and 100°, preferably 55° to 65°, while the broadness of notch on the outer wall is 0,01 to 1 mm, preferably 0,05 to 0,2 mm.

6. Pressurized container according to one of claims 1 to 5, characterized in that tough and hard high- grade steel is used as material.

7. Pressurized container according to one of claims 1 to 6, characterized in that the weakening line (17, 19) has been made by stamping and following glowing at least of the stamping area of the pressurized container.

8. Pressurized container according to claim 7, characterized in that the glowing has occurred under protection gas atmosphere and at a temperature of 1100° ± about 200°C and for a time period between 2 and 10 minutes.

## Revendications

1. Récipient pressurisé, en particulier boîtier de batterie (1) pour batteries à haut contenu énergétique à base de cellules au lithium/chlorure de thionyle et cellules analogues à base de $Li/SO_2$-, $Li/MnO_2$ et $Li/SO_2Cl_2$, doté d'un point destiné à la rupture en forme d'une seule ligne d'affaiblissement courbe dans le boîtier, ligne qui cède en cas de pression trop élevée de façon à ce que la ligne d'affaiblissement pivote vers l'extérieur autour de la ligne de jonction théorique entre les deux extrémités libres de la ligne d'affaiblissement, ces extrémités libres venant se confondre dans le récipient, caractérisé en ce que la ligne d'affaiblissement est une ligne en courbes décrivant une langue multiple (17,19).

2. Récipient pressurisé selon la revendication 1, caractérisé en ce que la langue multiple est une langue double (19) avec découpure de langue.

3. Récipient pressurisé selon la revendication 1 ou 2, caractérisé en ce que la ligne en courbes (17, 19) est prévue sur la surface latérale plane d'un récipient pressurisé de forme générale cylindrique comme un boîtier de batterie (1).

4. Récipient pressurisé selon l'une des revendications 1 à 3, caractérisé en ce que la ligne d'affaiblissement (17, 19) est estampée dans la paroi extérieure du récipient pressurisé.

5. Récipient pressurisé selon l'une des revendications 1 à 4, caractérisé en ce que l'épaisseur restante de la paroi le long de la ligne d'affaiblissement (17, 19) est de 0,02 à 0,1 mm, de préférence 0,04 à 0,06 mm, que l'épaisseur de la paroi en dehors de la ligne d'affaiblissement est d'environ 0,5 mm, et que la ligne d'affaiblissement a la forme d'une entaille d'un angle compris entre 30° et 100°, de préférence 55° à 65°, dont la largeur d'ouverture sur la paroi extérieure est de 0,01 à 1 mm, de préférence de 0,05 à 0,2 mm.

6. Récipient pressurisé selon l'une des revendications 1 à 5, caractérisé en ce que le matériau utilisé est de l'acier spécial dur et résistant.

7. Récipient pressurisé selon l'une des revendications 1 à 6, caractérisé en ce que la ligne d'affaiblissement (17, 19) est réalisée en estampant puis en portant au rouge au moins la zone d'estampage du récipient pressurisé.

8. Récipient pressurisé selon la revendication 7, caractérisé en ce que la température du rougissement en atmosphère gazeuse est d'environ 1.100°C plus/moins environ 200°C pour une durée de rougissement de 2 à 10 minutes.

Fig. 1

Fig. 3

Fig. 2